# EUROPÄISCHE PATENTANMELDUNG

(11) **EP 1 273 516 A1**
(43) Veröffentlichungstag der Anmeldung: **08.01.2003**
(21) Anmeldenummer: 02015034.8
(22) Anmeldetag: 05.07.2002
(51) Int. Cl.: B64D 45/00, G08B 15/00, H04B 10/12, H04N 7/18

(54) **Einrichtung zum Erfassen optischer Informationen**

(30) Priorität: 06.07.2001 DE 10132982
(71) Anmelder: AUDI AG, 85045 Ingolstadt (DE)
(72) Erfinder: Kolar, Robert, 93346 Ihrlerstein (DE); Stoll, Johann, 85123 Karlskron (DE); Schwarzbauer, Robert, 86570 Inchenhofen (DE)
(74) Vertreter: Thielmann, Frank

(57) **Zusammenfassung**

Bei einer Einrichtung (1) zum Erfassen optischer Informationen mit zumindest einer Empfangseinheit (2, 20, 21, 22, 23), sind optische Fasern (3, 4, 5, 6, 24, 25, 26, 27) zum Erfassen der optischen Informationen vorgesehen und zum Zusammenführen von diesen mit einer zentralen Empfangseinheit (2, 19) verbindbar oder verbunden.

## Beschreibung

Die Erfindung betrifft eine Einrichtung zum Erfassen optischer Informationen mit zumindest einer Empfangseinheit.

Aus zahlreichen technischen Gebieten ist es bekannt, Systeme auf optischer Basis zu Untersuchungs- und Beobachtungszwecken vorzusehen. Besonders wird dieses Mittel in der Automobilindustrie eingesetzt, um Fahrzeuge noch sicherer zu gestalten bzw. Unfälle zu vermeiden. Eine Art von Systemen ist hierbei ein Innenraumsensierungssystem, das die Beifahrerposition bewertet und beispielsweise für den Fall, dass der Beifahrer sich nicht in der vorgesehenen Position befindet, die Aktivierung des Beifahrerairbags entsprechend beeinflusst. Zu derartigen Systemen gehören ebenfalls Einschlaferkennungssysteme, automatische Abstandserkennungssysteme, Precrash-Erkennungssysteme, Fußgängerschutzsysteme, Rückfahrsysteme, Einparkhilfen, automatische Rückspiegel-Seitenspiegel-Systeme, Verkehrszeichenerkennungssysteme etc. Bei all diesen Systemen ist eine Aufzeichnung über Kameras vorgesehen.

Beispielsweise ist aus der DE 197 32 806 A1 eine Innenraumüberwachung von Flugzeugen bekannt. Zu diesem Zweck sind an Bord des Flugzeugs Bilderfassungsgeräte installiert, deren Daten auf eine bordeigene Kommunikationseinheit eingespeist werden. Die bordeigene Kommunikationseinheit steht im Datenaustausch mit einer stationären Kommunikationseinheit auf dem Boden. Neben der Bilddatenübertragung von der bordeigenen an die stationäre Kommunikationseinheit können Steuerdaten von letzterer zu der bordeigenen Kommunikationseinheit übertragen werden. Über Glasfaserkabel sind die Bilderfassungsgeräte an die bordeigene Kommunikationseinheit angeschlossen.

Gemäß der DE 195 46 391 C2 ist ebenfalls eine Mehrzahl von Videokameras zum Erzeugen von synchronisierten Videosignalen mit gemeinsamer Abtastperiode bekannt. Die Videokameras weisen CCD-Sensoren auf, die gegenüber Infrarotlicht empfindlich sind. Die mit den CCD-Videokameras aufgezeichneten Bilder werden in einem Computer weiterverarbeitet und verwaltet und die verarbeiteten interaktiven Bilder auf eine sich horizontal erstreckende längliche Bildausgabeeinrichtung, die sich direkt oberhalb des Armaturenbretts eines Fahrzeugs befindet, ausgegeben. Mit der in dieser Druckschrift beschriebenen Vorrichtung ist eine interaktive Kontrolle eines sich bewegenden Fahrzeugs möglich.

Aus der US 5,027,104 ist eine Vorrichtung zur Fahrzeugsicherung bekannt, die eine Mehrzahl an Videokameras aufweist, die an versteckten Orten eines Fahrzeugs angeordnet werden. Ein Sensor misst dabei eindringende Signale und aktiviert eine oder mehrere Kameras. Dies geschieht über einen Controller. Anstelle lediglich eines Sensors können auch mehrere Sensoren vorgesehen werden, die an unterschiedlichen Stellen am Fahrzeug angebracht werden, wobei jeder Sensor mit einer oder mehreren Kameras verbunden ist.

Aus der GB 2 287 152 A ist ebenfalls ein Fahrzeugsicherungssystem bekannt, bei dem Videosignale über Kabel von einer Kamera an eine "Black Box" gesendet werden. Innerhalb der "Black Box" befindet sich eine Aufzeichnungseinrichtung. Die Kamera ist im Armaturenbrett des Fahrzeugs angeordnet und kann durch herkömmliche Verkabelung oder durch Verwendung von optischen Fasern mit der getrennt angeordneten Aufzeichnungseinrichtung innerhalb der "Black Box" verbunden werden.

All den Einrichtungen des Standes der Technik ist es gemeinsam, dass Kameras jeweils an verschiedenen Stellen in oder an einem Fahrzeug oder Flugzeug angeordnet werden, was jedoch mit einem verhältnismäßig großen Platzbedarf verbunden ist. Außerdem besteht das Problem, dass durch eventuelle Erwärmung der Kamera die umgebende Fahrzeug- oder Flugzeugelektronik negativ beeinflusst werden kann. Ein solcher negativer Einfluss ist auch durch elektromagnetische Wellen möglich, die von der bzw. den Kameras ausgestrahlt werden.

Der vorliegenden Erfindung liegt daher die Aufgabe zugrunde, eine Erfassungseinrichtung nach dem Oberbegriff des Anspruchs 1 dahingehend fortzubilden, dass dem in einem Fahrzeug herrschenden Platzmangel Rechnung getragen wird und hohe Anforderungen an die elektromagnetische Verträglichkeit und nicht zu überschreitende Maximaltemperaturen eingehalten werden können und die Unterbringung einer solchen Erfassungseinrichtung in einem beliebigen Fahrzeug, Flugzeug etc. problemlos möglich ist.

Die Aufgabe wird durch eine Einrichtung zum Erfassen optischer Informationen mit zumindest einer Empfangseinheit dadurch gelöst, dass optische Fasern zum Erfassen der optischen Informationen vorgesehen und zum Zusammenführen von diesen mit einer zentralen Empfangseinheit verbindbar oder verbunden sind. Weiterbildungen der Erfindung sind in den abhängigen Ansprüchen definiert.

Dadurch wird eine Einrichtung zum Erfassen optischer Informationen geschaffen, bei der die in einem Fahrzeug, Flugzeug etc. unterzubringenden Kameras zentralisiert werden können. Hierdurch werden die optischen Informationen zentral zusammengeführt, wodurch das Vorsehen einzelner Kameras an den jeweils zu beobachtenden Stellen nicht mehr erforderlich ist. Der Platzbedarf von optischen Fasern ist demgegenüber sehr gering. Außerdem können optische Fasern beliebig gekrümmt werden, wodurch sie eine beliebige Position einnehmen und dadurch ein oder mehrere Objekte beliebig beobachten können. Da sich die optischen Fasern nicht von sich aus erwärmen, stellen sie somit kein Problem für die umgebende Elektronik des Fahrzeugs, Flugzeugs etc. dar. Ebenso senden sie keine elektromagnetischen Wellen aus, so dass ihre elektromagnetische Verträglichkeit gegeben ist. Optische Fasern sind daher optimal geeignet zum Erfassen der optischen Informationen, da sie beliebig an jedem Ort eingesetzt und zum Zusammenführen der gesammelten optischen Informationen in einer zentral angeordneten Empfangseinheit mit dieser verbunden werden können.

Die der zentralen Empfangseinheit entfernten Enden der optischen Fasern sind vorzugsweise unterschiedlich ausgerichtet oder ausrichtbar und/oder angeordnet. Bevorzugt sind die entfernten Enden der optischen Fasern so ausgerichtet, dass ein Objekt aus unterschiedlichen Richtungen und/oder mehrere Objekte zugleich beobachtbar sind. Hierdurch ist vorteilhaft eine Beobachtung eines Objekts aus mehreren Richtungen möglich, wobei jeweils lediglich wenig Platzbedarf notwendig, jedoch ein Stereosehen des Objektes ermöglicht ist. Ebenso können gleichzeitig mehrere Objekte beobachtet werden, beispielsweise die Umgebung des Fahrzeugs zu allen Richtungen, um eine automatische Abstandserkennung mit den erforderlichen Informationen versorgen zu können. Dadurch, dass gleichzeitig mehrere Objekte zugleich beobachtet werden können, ist es einem Fahrer möglich, die verschiedensten Informationen gesammelt zu erhalten, um entsprechend reagieren zu können. Gegebenenfalls können diese Informationen auch einem System aufgegeben werden, das beispielsweise selbständig einen Bremsvorgang einleitet, sofern der Abstand zu dem vorfahrenden Fahrzeug zu gering wird. Beispielsweise kann eine optische Faser in Richtung zum Rückspiegel, eine zum Seitenspiegel und eine in den Fond des Fahrgastraums gerichtet sein. Eine weitere optische Faser kann auf den Beifahrersitz, wiederum eine weitere auf einen Kindersitz gerichtet sein. Auch Aufnahmen vom toten Winkel sind hierdurch möglich, indem eine optische Faser entsprechend ausgerichtet ist.

Vorzugsweise weisen die optischen Fasern Linsen und/oder einen Linsenschliff auf, insbesondere auch optische Leiter. Besonders bevorzugt sind die Enden der optischen Fasern in der gewünschten Weise angeschliffen, um als Linse zu wirken.

Bevorzugt weist die zentrale Empfangseinheit eine eingehende Signale verarbeitende Zentralelektronik auf und/oder ist mit dieser verbindbar oder verbunden. Ähnlich wie in der Endoskopietechnik kann eine solche Verbindung vorzugsweise über optische Leiter erfolgen. Dadurch ist es möglich, dass die optischen Fasern getrennt und unabhängig von einer Zentralelektronik an einer optimalen Stelle angebracht werden können. Vorteilhaft kann dabei eine gemeinsame Zentralelektronik alle eingehenden Signale zentral und gemeinsam verarbeiten. Durch Vorsehen der Zentralelektronik sowie durch die elektrische Entkopplung der optischen Anbindung kann vorteilhaft eine Optimierung der elektromagnetischen Verträglichkeit, des Einbauorts sowie der Einbaulage und der Temperaturempfindlichkeit erfolgen. Auch die Kosten können optimiert werden. Außerdem ist es vorteilhaft möglich, auch einen relativ großen Abstand zwischen zwei optischen Fasern vorzusehen, der beim Stereosehen erforderlich ist.

Vorzugsweise weist die zentrale Empfangseinheit zumindest einen Sensor auf. Besonders bevorzugt ist zumindest ein Sensor mit zumindest zwei optischen Fasern verbindbar oder verbunden. Ist lediglich ein Sensor in der zentralen Empfangseinheit vorgesehen, kann eine weitere Reduzierung des Platzbedarfs erfolgen. Der eine Sensor empfängt dann von den verschiedenen optischen Fasern deren Bilder bzw. optische Informationen und gibt diese vorzugsweise weiter an eine Signalaufbereitungseinrichtung, um die empfangenen Signale zur weiteren Signalverarbeitung aufzubereiten. Die aufbereiteten Signale können nachfolgend an eine Signalverarbeitungseinheit weitergegeben werden, die beispielsweise erkennt, ob eine Unterschreitung eines vorgegebenen Abstandes zu einem vorfahrenden Fahrzeug oder eines seitlichen oder hinteren Abstandes eines Fahrzeugs zu anderen Verkehrsteilnehmern und/oder Leitplanken etc. auftritt. Auch das Auftauchen eines Fußgängers im Aufzeichnungsbereich kann in einer solchen Signalverarbeitungseinheit ermittelt werden.

Bei Vorsehen mehrerer Sensoren ist vorzugsweise jeweils ein Sensor mit einer optischen Faser verbindbar oder verbunden. Auch kann ein Sensor mit mehr als einer optischen Faser verbunden sein, insbesondere einem Faserbündel. Mehrere Sensoren sind dann vorzugsweise in einer Steuereinheit zusammenfassbar oder zusammengefasst. Eine Lösung durch Vorsehen mehrerer Sensoren kann insbesondere bei einem größeren Platzangebot vorgesehen werden. Durch Vorsehen mehrerer Sensoren ist eine gewisse Redundanz gegeben, so dass bei Ausfall eines Sensors die übrigen Sensoren der Steuereinheit weiterhin Informationen liefern können. Andererseits ist durch Vorsehen eines Warnsignals zur Ausfallanzeige bei Vorsehen lediglich eines Sensors für den Führer eines Fahrzeugs, Flugszeugs etc. ebenfalls offensichtlich, dass dieser nicht einwandfrei arbeitet und Maßnahmen zur Behebung der Störung vorzunehmen sind.

Vorzugsweise ist bei Vorsehen mehrerer Sensoren eine gemeinsame Signalverarbeitungseinheit zum Verarbeiten der Eingehenden Signale vorgesehen. Hierdurch wird wiederum der Platzbedarf verringert, da lediglich eine einzige Signalverarbeitungseinheit vorgesehen wird. Insbesondere kann dann, wenn Sensoren teilweise mit lediglich einer optischen Faser verbunden sind und teilweise mit mehreren ebenfalls lediglich eine Signalverarbeitungseinheit vorgesehen werden, die die Signale aller Sensoren weiterverarbeitet. Außer der Platzersparnis wird hierdurch auch sichergestellt, dass die eingehenden Informationen zu einem kompletten Bild der aktuellen Situation führen, so dass gegebenenfalls eine bildliche Darstellung auf einem Schirm oder dergleichen ebenfalls lediglich von einer Signalverarbeitungseinheit erzeugt bzw. eingespeist wird.

Besonders bevorzugt ist die Erfassungseinrichtung in einem Land-, Luft- oder Wasserfahrzeug vorgesehen. Sie kann jedoch beispielsweise auch in Bauwerken angeordnet werden, um eine Raumüberwachung vorzunehmen. Durch den geringen Platzbedarf kann sie beispielsweise auch bei Banken im Bereich der Schalter und/oder Tresore vorgesehen werden. Aufgrund der geringen Größe und möglichen Vielzahl an optischen Fasern lassen sich deren Enden, die die Bilderfassung vornehmen, ausgezeichnet verstecken, um bei einem Überfall oder Einbruch von den betreffenden Personen nicht als Aufzeichnungs- bzw. Erfassungseinrichtung erkannt zu werden.

Zur näheren Erläuterung der Erfindung werden im folgenden Ausführungsbeispiele anhand der Zeichnungen näher beschrieben. Diese zeigen in:
Figur 1eine Prinzipskizze einer ersten Ausführungsform einer erfindungsgemäßen Erfassungseinrichtung mit einem Sensor, und
Figur 2eine Prinzipskizze einer zweiten Ausführungsform einer erfindungsgemäßen Erfassungseinrichtung mit vier Sensoren.

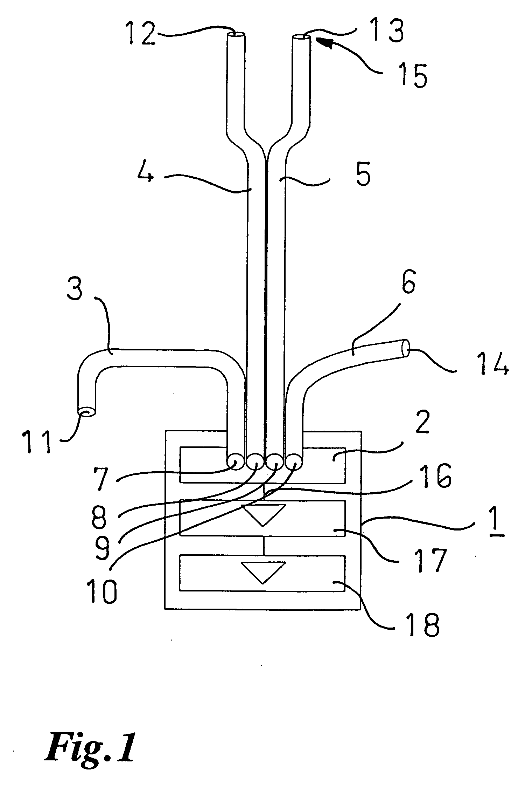

Figur 1 zeigt eine Prinzipskizze einer ersten Ausführungsform einer Erfassungseinrichtung 1 mit einem Sensor 2, dem vier optische Fasern 3, 4, 5, 6 zugeordnet sind. Die optischen Fasern 3, 4, 5, 6 sind jeweils mit einem Ende 7, 8, 9, 10 mit dem Sensor verbunden, wohingegen die von dem Sensor entfernten Enden 11, 12, 13, 14 bei einem zu beobachtenden Objekt angeordnet sind. Die von dem Sensor entfernten Enden 11, 12, 13, 14 können bei Anordnung in einem Fahrzeug beispielsweise im Bereich des Beifahrersitzes, eines Kindersitzes, in Richtung zum toten Winkel eines Fahrzeugs, bei dessen Rückspiegel, mit Blick auf dessen Seitenspiegel angeordnet bzw. auf den Fond und/oder in beliebige andere zu beobachtende Richtungen und Positionen eines Fahrzeugs gerichtet sein. Um beispielsweise ein Stereosehen ermöglichen zu können, werden beide Fasern 4, 5 auf ein und dasselbe Objekt gerichtet, lediglich aus unterschiedlichen Richtungen.

Jede der optischen Fasern 3, 4, 5, 6 weist an ihrem sensorentfernten Ende eine jeweilige Linse 15 auf bzw. einen Linsenschliff, um auf den entsprechenden Abstand zu dem zu betrachtenden Objekt und den zu beobachtenden Winkelbereich abgestimmt zu sein. Aus diesem Grunde sind die in Figur 1 dargestellten sensorentfernten Enden der optischen Fasern jeweils mit unterschiedlichen Linsen bzw. Linsenschliffen versehen.

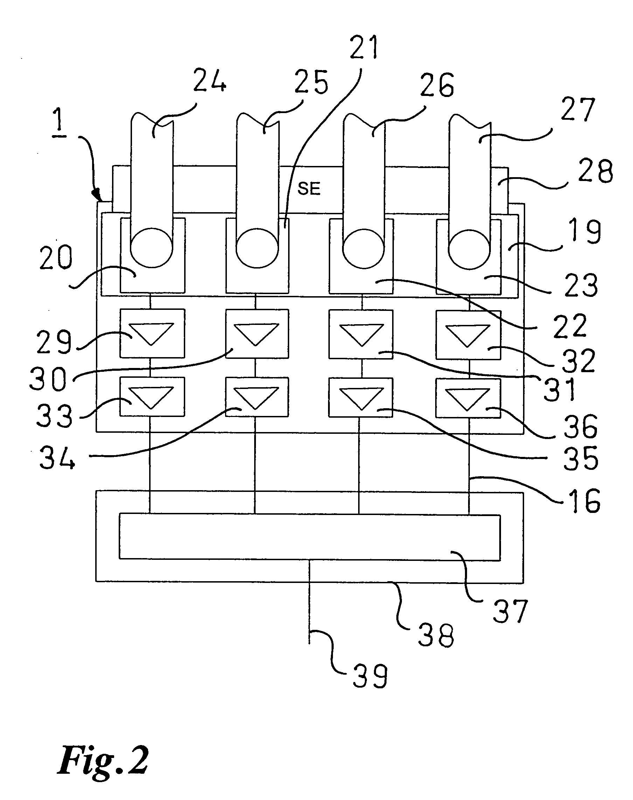

Die in dem Sensor als Empfangseinheit empfangenen optischen Informationen bzw. Signale werden vorzugsweise über optische Leitungen 16 an eine Signalaufbereitungseinheit 17 weitergegeben. Diese bereitet die eingehenden Signale so auf, dass eine Weiterverarbeitung in einer Zentralelektronik 38, wie sie in Figur 2 dargestellt ist, erfolgen kann. An die Signalaufbereitungseinheit ist daher eine Ausgabeeinheit 18 angeschlossen.

Alternativ zu dem Vorsehen lediglich eines Sensors 2 sind in der Ausführungsform gemäß Figur 2 vier Sensoren 20, 21, 22, 23 in der Erfassungseinrichtung 1 vorgesehen. Jeder der vier Sensoren weist lediglich eine optische Faser 24, 25, 26, 27 auf. Anstelle des Vorsehens einer optischen Faser je Sensor können auch mehrere optische Fasern, wie in Figur 1 dargestellt, je Sensor vorgesehen werden. Es können auch einzelne Sensoren mit mehreren optischen Fasern versehen werden, wohingegen andere Sensoren nur eine optische Faser aufweisen. Um bei Vorsehen getrennter Sensoren eindeutige Signale bzw. optische Informationen empfangen zu können, weist die Erfassungseinrichtung eine gemeinsame Steuereinheit 28 für alle Sensoren auf. Die Steuereinheit koordiniert den Empfang und die Weitergabe der empfangenen optischen Informationen. Diese werden wiederum, ähnlich wie dies in Figur 1 gezeigt ist, durch vier verschiedene Signalaufbereitungseinheiten 29, 30, 31, 32 aufbereitet und an die Ausgabeeinheiten 33, 34, 35, 36 weitergegeben.

Die entsprechend aufbereiteten optischen Signale werden zur Weiterverarbeitung einer gemeinsamen Signalverarbeitungseinheit 37 weitergegeben. Die Signalverarbeitungseinheit 37 dient der Weiterverarbeitung der optischen Signale aller vier Sensoren 20 bis 23und ist in einer Zentralelektronik 38 vorgesehen. Die verarbeiteten Signale können über eine Signalleitung 39 beispielsweise einem Anzeigemittel, wie einer Signallampe, akustischen Warneinrichtung, einem Bildschirm, etc., einem Erkennungssystem zum Erkennen einer Precrash-Situation oder dergleichen oder z.B. einer Steuereinheit zum Ansteuern einer Funktion, wie der Auslösung oder Anpassung des Auslösevorgangs für einen Airbag oder dergleichen zugeführt werden.

Sowohl bei Vorsehen lediglich eines einzelnen Sensors mit mehreren optischen Fasern als auch beim Vorsehen mehrerer Sensoren mit jeweils einer oder mehrerer optischer Fasern ist der Vorteil des geringen Platzbedarfs gegenüber den bekannten Systemen mit mehreren vor Ort plazierten Kameras gegeben. In jedem Falle werden lediglich die entfernten Enden. der optischen Fasern, die jeweils mit Linsen und/oder Linsenschliffen versehen sind, im Bereich der zu beobachtenden Objekt plaziert, wobei unter Objekt hier nicht nur Gegenstände und/oder Personen im Innenraum des Fahrzeugs, sondern auch beliebige Ecken außerhalb des Fahrzeugs verstanden werden sollen. Beispielsweise können im Himmel des Fahrzeugs und/oder Bereich der Fahrzeugholme eine erforderliche Anzahl von optischen Fasern enden.

Neben den vorstehend beschriebenen Ausführungsformen einer erfindungsgemäßen Erfassungseinrichtung zum Erfassen optischer Informationen mit zumindest einer Empfangseinheit können noch zahlreiche andere vorgesehen werden, bei denen jeweils optische Fasern zum Erfassen der optischen Informationen vorgesehen und zum Zusammenführen von diesen mit der zentralen Empfangseinheit verbindbar oder verbunden sind. Der Anwendungsbereich einer solchen Erfassungseinrichtung reicht von Landfahrzeugen über Luft- und Wasserfahrzeuge bis hin zu anderen Objekten, wie Gebäuden. Beispielsweise kann die Überwachung einer Eingangstür ebenfalls durch solche optischen Fasern erfolgen, da diese aufgrund ihrer geringen Größe gut neben Lampen etc. versteckt werden können. Auch Innenraumüberwachungen von Gebäuden können mit erfindungsgemäßen Erfassungseinrichtungen platzsparend und außerdem für den Betrachter kaum sichtbar vorgesehen werden.

### Bezugszeichenliste

- 1: Erfassungseinrichtung
- 2: Sensor
- 3: optische Faser
- 4: optische Faser
- 5: optische Faser
- 6: optische Faser
- 7: sensorverbundenes Ende
- 8: sensorverbundenes Ende
- 9: sensorverbundenes Ende
- 10: sensorverbundenes Ende
- 11: sensorentferntes Ende
- 12: sensorentferntes Ende
- 13: sensorentferntes Ende
- 14: sensorentferntes Ende
- 15: Linse
- 16: optische Leitung
- 17: Signalaufbereitungseinheit
- 18: Ausgabeeinheit
- 19: zentrale Empfangseinheit
- 20: Sensor
- 21: Sensor
- 22: Sensor
- 23: Sensor
- 24: optische Faser
- 25: optische Faser
- 26: optische Faser
- 27: optische Faser
- 28: Steuereinheit
- 29: Signalaufbereitungseinheit
- 30: Signalaufbereitungseinheit
- 31: Signalaufbereitungseinheit
- 32: Signalaufbereitungseinheit
- 33: Ausgabeeinheit
- 34: Ausgabeeinheit
- 35: Ausgabeeinheit
- 36: Ausgabeeinheit
- 37: Signalverarbeitungseinheit
- 38: Signalleitung

## Patentansprüche

1. Einrichtung (1) zum Erfassen optischer Informationen mit zumindest einer Empfangseinheit (2, 20, 21, 22, 23),
**dadurch gekennzeichnet, dass**
optische Fasern (3, 4, 5, 6, 24, 25, 26, 27) zum Erfassen der optischen Informationen vorgesehen und zum Zusammenführen von diesen mit einer zentralen Empfangseinheit (2, 19) verbindbar oder verbunden sind.

2. Erfassungseinrichtung (1) nach Anspruch 1,
**dadurch gekennzeichnet, dass**
die der zentralen Empfangseinheit (2, 19) entfernten Enden (11, 12, 13, 14) der optischen Fasern (3, 4, 5, 6, 24, 25, 26, 27) unterschiedlich ausgerichtet oder ausrichtbar und/oder angeordnet sind.

3. Erfassungseinrichtung (1) nach Anspruch 1 oder 2,
**dadurch gekennzeichnet, dass**
die entfernten Enden (11, 12, 13, 14) der optischen Fasern (3, 4, 5, 6, 24, 25, 26, 27) so ausgerichtet sind, dass ein Objekt aus unterschiedlichen Richtungen und/oder mehrere Objekte zugleich beobachtbar sind.

4. Erfassungseinrichtung (1) nach einem der vorstehenden Ansprüche,
**dadurch gekennzeichnet, dass**
die optischen Fasern (3, 4, 5, 6, 24, 25, 26, 27) Linsen (15) und/oder einen Linsenschliff aufweisen.

5. Erfassungseinrichtung (1) nach einem der vorstehenden Ansprüche,
**dadurch gekennzeichnet, dass**
die zentrale Empfangseinheit (2, 19) eine eingehende Signale verarbeitende Zentralelektronik (17, 29, 30, 31, 32, 32, 37) mit dieser verbindbar oder verbunden ist und/oder diese aufweist.

6. Erfassungseinrichtung (1) nach einem der vorstehenden Ansprüche,
**dadurch gekennzeichnet, dass**
die zentrale Empfangseinheit (2, 19) zumindest einen Sensor (2, 20, 21, 22, 23) aufweist.

7. Erfassungseinrichtung (1) nach Anspruch 6,
**dadurch gekennzeichnet, dass**
zumindest ein Sensor (2) mit zumindest zwei optischen Fasern (3, 4, 5, 6) verbindbar oder verbunden ist.

8. Erfassungseinrichtung (1) nach Anspruch 6,
**dadurch gekennzeichnet, dass**
bei Vorsehen mehrerer Sensoren (20, 21, 22, 23) jeweils ein Sensor mit einer optischen Faser (24, 25, 26, 27) verbindbar oder verbunden ist.

9. Erfassungseinrichtung (1) nach Anspruch 6 oder 8,
**dadurch gekennzeichnet, dass**
die Sensoren (20, 21, 22, 23) in einer Steuereinheit (28) zusammenfassbar oder zusammengefasst sind und/oder die zentrale Empfangseinheit (19) eine solche aufweist.

10. Erfassungseinrichtung (1) nach einem der vorstehenden Ansprüche,
**dadurch gekennzeichnet, dass**
bei Vorsehen mehrerer Sensoren (20, 21, 22, 23) eine gemeinsame Signalverarbeitungseinheit (37) zum Verarbeiten der eingehenden Signale vorgesehen ist.

11. Erfassungseinrichtung (1) nach einem der vorstehenden Ansprüche,
**dadurch gekennzeichnet, dass**
die Erfassungseinrichtung (1) in einem Land-, Luft- oder Wasserfahrzeug und/oder einem Gebäude anordbar ist.
